# EUROPÄISCHE PATENTANMELDUNG

(11) **EP 1 582 903 A1**
(43) Veröffentlichungstag der Anmeldung: **05.10.2005**
(21) Anmeldenummer: 05003566.6
(22) Anmeldetag: 18.02.2005
(51) Int. Cl.: G02B 21/00, G02B 7/00

(54) **Vorrichtung zum Befestigen eines Mikroskophalters**

(30) Priorität: 29.03.2004 DE 202004004894 U
(71) Anmelder: Leica Microsystems (Schweiz) AG, 9435 Heerbrugg (CH)
(72) Erfinder: Zimmermann, Heinz, 9436 Balgach (CH); Geschwentner, Otto, 9436 Balgach (CH); Soppelsa, Peter, 9445 Rebstein (CH); Keller, Stephan, 8590 Romanshorn (CH)
(74) Vertreter: Grunert, Marcus

(57) **Zusammenfassung**

Es wird eine Vorrichtung zum Befestigen eines Mikroskophalters (102) an einem Träger (108), die eine Klemmeinrichtung (120) zum Halten des Mikroskophalters (102) in einer auszuwählenden Position aufweist, vorgeschlagen, bei der eine Arretiereinrichtung (115) zur zusätzlichen Sicherung des Mikroskophalters (102) am Träger vorgesehen ist. Bei der Arretiereinrichtung kann es sich um eine Schraubverbindung, um einen federbelasteten Schieber, eine drehgelagerte Klemmlasche oder eine federbelastete Klemmzange handeln.

## Beschreibung

Die vorliegende Erfindung betrifft eine Vorrichtung zum Befestigen eines Mikroskophalters an einem Träger, wobei eine Klemmeinrichtung zum Halten des Mikroskophalters in einer auszuwählenden Position vorgesehen ist. Derartige Vorrichtungen verbinden beispielsweise ein an einem Mikroskophalter befestigtes Mikroskop mit einem Schwenkarm, der drehbar an einer Säule gelagert ist, die ihrerseits von einer Basisplatte gestützt wird. Der Schwenkarm ist um die Säule verschwenkbar und in der Höhe über der Basisplatte verstellbar. An derartigen Schwenkarmstativen dient die Vorrichtung zur betriebssicheren Aufnahme von Mikroskophaltern.

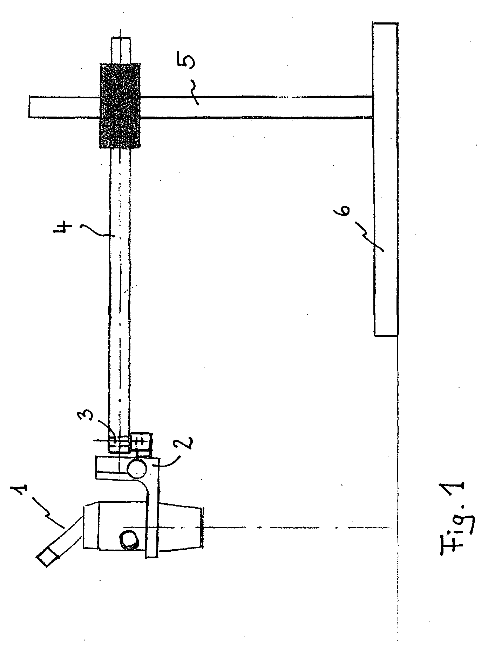

Eine schematische Darstellung eines solchen Schwenkarmstativs mit Mikroskop zeigt Fig. 1. Der Mikroskophalter 2 trägt ein Mikroskop 1 und ist seinerseits am Schwenkarm 4 des Schwenkarmstativs befestigt. Die von der Basisplatte 6 ausgehende Säule 5 trägt Schwenkarm 4 und Mikroskophalter 2. Dargestellt ist ein Mikroskophalter 2, der von unten an den Träger, der hier im Ende des Schwenkarms 4 integriert ist, montiert werden muss. Auch andere Befestigungsarten eines Mikroskophalters sind bekannt, bei denen die Befestigung über den Bolzen von oben oder aber auch von vorne, d.h. in horizontaler Richtung, erfolgen kann. Erwünscht ist eine Verdrehbarkeit des Mikroskophalters 2 um die Achse des Bolzens 3, um die Stellung des Mikroskops 1 nachjustieren zu können.

Die Befestigung des Mikroskophalters erfolgt bisher über eine Klemmeinrichtung, die den Mikroskophalter in einer auszuwählenden Position (Arbeitsposition) am Träger hält. Insbesondere bei einer Befestigung von unten (vergl. Figur 1) besteht beim Lösen einer derartigen Klemmeinrichtung zum Ändern der Arbeitsposition die Gefahr, dass sich der Bolzen vom Träger löst und somit der Mikroskophalter einschließlich Mikroskop nach unten fällt. Beim Drehen um die Bolzenachse, also beim Verändern der Arbeitsposition, ist somit dem Kunden keine Betriebssicherheit gewährleistet.

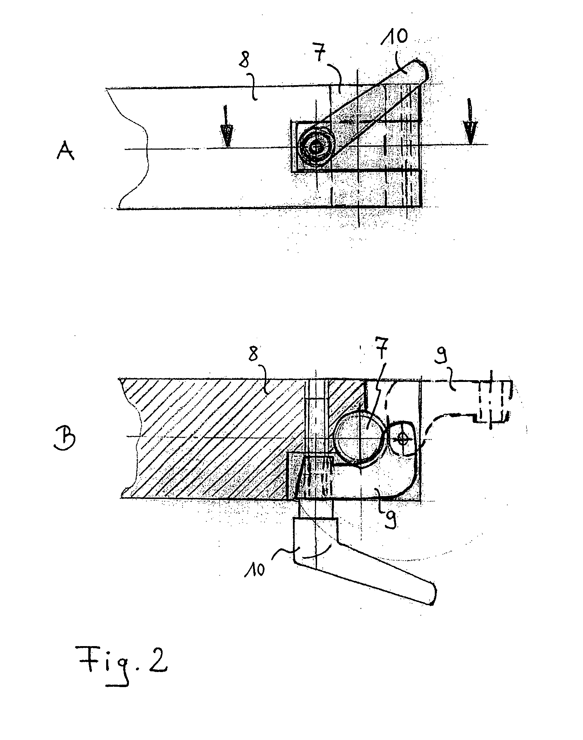

Figur 2 zeigt in einer Seitenansicht (Fig. 2A) und im Schnitt von oben (Fig. 2B) schematisch eine bekannte Befestigungsvorrichtung für einen Mikroskophalter mit einer solchen Klemmeinrichtung, wie oben beschrieben. Der Bolzen des Mikroskophalters wird bei dieser bekannten Lösung vorzugsweise von unten durch die Aufnahmebohrung 7 im Träger 8 eingeführt, wobei hierzu die Klemmlasche 9 soweit nach außen geschwenkt sein muss, dass das Innere der Aufnahmebohrung 7 freigegeben ist. Der in die Aufnahmebohrung 7 eingeführte Bolzen des Mikroskophalters wird anschließend durch Einschwenken der Klemmlasche 9 festgeklemmt. In der Regel weisen die Bolzen der Mikroskophalter auf ihrer Mantelfläche eine Eindrehung auf, in die die Kulisse der Klemmlasche 9 eingreifen kann. Durch Zudrehen des Schraubverschlusses 10 kann die Klemmwirkung der Klemmlasche 9 vergrößert werden. Eine Verstellung der Arbeitsposition kann dann durch Lockerung des Schraubverschlusses 10 erfolgen.

Bei dieser bekannten Befestigungsvorrichtung, deren Klemmlasche aus Kunststoff gefertigt ist, besteht die Gefahr, dass aufgrund des fließenden Kunststoffs bei Lockerung der Verschraubung 10 sich der Bolzen des Mikroskophalters gänzlich von der Klemmlasche löst. Aufgrund der Elastizität des Kunststoffs und seiner geringen Widerstandsfähigkeit gegen Abnutzung nimmt die Klemmwirkung der bekannten Vorrichtung mit der Zeit ab. Eine Befestigung des Mikroskophalters von oben ist wegen der Notwendigkeit des Ausschwenkens der Lasche zum Befestigen nur schlecht möglich, da die Lasche mit dem Mikroskophalter kollidieren würde. Eine horizontale Befestigung ist mit der bekannten Vorrichtung nicht möglich. Weitere Nachteile betreffen das Vorhandensein verlierbarer Teile (Verschraubung 10) sowie die ergonomische Gestaltung.

Aufgabe vorliegender Erfindung ist, eine sichere Vorrichtung zum Befestigen eines Mikroskophalters anzugeben, mit der eine horizontale (von vorne) sowie eine vertikale (von oben sowie von unten) Befestigung eines Mikroskophalters an einem Träger für verschiedenste Typen von Mikroskophaltern möglich ist. Die erfindungsgemäße Vorrichtung soll in erster Linie eine hohe Sicherheit für den Benutzer bieten sowie ergonomisch sinnvoll gestaltet sein und eine hohe Lebensdauer aufweisen.

Diese Aufgabe wird durch eine Vorrichtung gemäß Anspruch 1 gelöst. Verschiedene Ausführungsformen dieser Lösung sind in den Ansprüchen 3, 6, 11 und 17 beschrieben. Vorteilhafte Ausgestaltungen ergeben sich aus den jeweiligen Unteransprüchen und der nachfolgenden Beschreibung.

Kerngedanke der vorliegenden Erfindung ist es, die bekannte Vorrichtung zusätzlich mit einer Arretiereinrichtung zur Sicherung des Mikroskophalters am Träger auszustatten. Hierdurch werden die Funktionen von Lösen (zum Einstellen einer Arbeitsposition) und Entriegeln (zum Montieren und Demontieren eines Mikroskophalters) klar getrennt. Dadurch wird die Betriebssicherheit gesteigert.

In einer ersten Ausführungsform der Erfindung weist der Träger eine Aufnahmebohrung für einen Bolzen eines Mikroskophalters auf, wobei dieser Bolzen mit einem Innengewinde versehen ist. Die Arretiereinrichtung weist eine Schraube auf, die in das Innengewinde des Bolzens einzuschrauben ist. Zur sicheren Befestigung wird bei dieser Ausführungsform folglich der Bolzen des Mikroskophalters an den Träger geschraubt, wobei unabhängig davon eine Verstellung der Position des Mikroskophalters über eine Klemmeinrichtung möglich ist. Die Arretiereinrichtung, hier die Schraubverbindung, wird nur zur Abnahme des Mikroskophalters gelöst. Bei dieser speziellen Ausführungsform ist unter Umständen darauf zu achten, dass die Stärke der Verschraubung noch ein Verdrehen des Bolzens zur Änderung der Arbeitsposition zulässt, wenn die Klemmeinrichtung entsprechend gelockert ist.

Vorteilhaft bei dieser Ausführungsform ist die Verwendung einer handelsüblichen Schraube mit Unterlegscheibe, wobei der äußere Durchmesser der Unterlegscheibe größer ist als der Durchmesser der Aufnahmebohrung für den Bolzen, so dass sich die Unterlegscheibe beim Verschrauben gegen den Träger abstützt.

Vorteilhaft ist weiterhin, wenn die Klemmeinrichtung eine Klemmschraube aufweist, die durch den Träger hindurch in das Innere der Aufnahmebohrung für den Bolzen einschraubbar ist, wobei die Schraubrichtung der Klemmschraube vorzugsweise senkrecht zur Richtung der Aufnahmebohrung für den Bolzen verläuft. Der Bolzen kann vertikal oder horizontal in eine entsprechende Aufnahmebohrung am Träger eingeführt werden, wobei die Klemmschraube senkrecht hierzu (von der Seite) in den Träger eingeschraubt wird, bis sie den Bolzen in der Aufnahmebohrung erreicht und diesen festklemmt.

Da die verwendeten Bolzen der Mikroskophalter in der Regel eine Eindrehung von etwa einem Millimeter in einem Teil ihrer Mantelfläche aufweisen, ist es vorteilhaft, wenn die Klemmschraube an ihrer Stirnfläche derart ausgebildet ist, dass sie in die Eindrehung am Bolzen eindrücken kann. Das Festdrehen der Klemmschraube verursacht einen Kraftschluss mit dem Bolzen des Mikroskophalters. Durch Lockern der Klemmschraube ist eine Verdrehung des Mikroskophalters möglich. Während der Verdrehung des Mikroskophalters bleibt erfindungsgemäß der Mikroskophalter fest mit dem Träger verbunden, da eine Betätigung der Klemmeinrichtung keinen Einfluss auf die Arretiereinrichtung ausübt.

In einer zweiten Ausführungsform weist der Träger wiederum eine Aufnahmebohrung auf, die mit einem Bolzen des Mikroskophalters in Eingriff zu bringen ist, wobei die Arretiereinrichtung einen federbelasteten Schieber aufweist, der in seiner Arretierposition in das Innere der Aufnahmebohrung für den Bolzen ragt. Die Arretierfunktion wird bei dieser Ausführungsform durch einen Schieber ausgeübt, der mit der Federkraft gegen einen in der Aufnahmebohrung befindlichen Bolzen drückt. Vorzugsweise verläuft die Aufnahmebohrung für den Schieber senkrecht zur (vertikalen) Aufnahmebohrung für den Bolzen des Mikroskophalters.

Es ist zweckmäßig, die Stirnfläche des Schiebers derart auszubilden, dass diese in der Arretierposition in eine seitliche Eindrehung am Bolzen des Mikroskophalters einschnappt.

Zum Anbringen des Mikroskophalters am Träger wird der Schieber gegen die Federkraft zurückgeschoben, so dass die Aufnahmebohrung für den Bolzen freigegeben wird. Hierzu ist es sinnvoll, wenn die Arretiereinrichtung eine Parkposition aufweist, in der der Schieber ohne Kraftaufwand nicht in das Innere der Aufnahmebohrung für den Bolzen des Mikroskophalters ragt.

Die Klemmeinrichtung kann in gleicher Weise wie bei der ersten Ausführungsform ausgebildet sein.

In diesem Fall ist es vorteilhaft, wenn die Schraubrichtung der Klemmschraube senkrecht zur Richtung der Aufnahmebohrung für den Schieber der Arretiereinrichtung verläuft. Auf diese Weise können die Aufnahmebohrung für den Bolzen bei einer vertikalen Befestigung, die Aufnahmebohrung für den Schieber der Arretiereinrichtung sowie die Bohrung des Gewindes der Klemmschraube zueinander senkrecht stehen, wodurch eine ergonomisch sinnvolle Anordnung der Komponenten erzielt wird.

In einer dritten Ausführungsform weist der Träger eine Aufnahmebohrung für einen Bolzen des Mikroskophalters auf und die Arretiereinrichtung enthält eine drehgelagerte Klemmlasche, die durch Verschwenken in eine Arretierstellung gebracht werden kann, in der die Klemmlasche den Bolzen im Inneren der Aufnahmebohrung hält.

Bei dieser Ausführungsform wird die Arretiereinrichtung im Wesentlichen durch eine drehgelagerte Klemmlasche gebildet, die den in die Aufnahmebohrung im Träger eingeführten Bolzen arretiert, also gegen ein Lösen vom Träger sichert.

Hierzu weist der Bolzen vorzugsweise eine seitliche Eindrehung und die Klemmlasche eine entsprechend ausgeformte Kulisse auf, so dass in der Arretierstellung der in die Aufnahmebohrung für den Bolzen ragende Teil der Klemmlaschenkulisse in die seitliche Eindrehung am Bolzen eingreift und diesen auf diese Weise sichert.

Um eine hohe Sicherheit bei dieser Ausführungsform zu erzielen, ist es vorteilhaft, wenn der überwiegende Teil des Verschwenkbereichs der Klemmlasche zu einer Arretierstellung der Arretiereinrichtung führt, während der andere Teil zu einer Freigabestellung führt, in der der Bolzen des Mikroskophalters frei in der Aufnahmebohrung im Träger bewegbar ist. Hierbei ist es wiederum von Vorteil, wenn die Klemmlasche nur in einer einzigen Position den Bolzen freigibt.

Eine sichere Arretierung lässt sich insbesondere dann erzielen, wenn die Klemmlasche aus Metall gefertigt ist.

In dieser dritten Ausführungsform kann die Klemmeinrichtung wiederum im Wesentlichen durch eine Klemmschraube gebildet werden, die vorzugsweise nicht verlierbar ausgeführt ist, wobei bei gelöster Klemmschraube der Mikroskophalter in eine bestimmte Arbeitsposition gebracht werden kann, während er durch die Arretiereinrichtung sicher am Träger gehalten wird. Die Klemmschraube kann auch in diesem Fall wieder durch den Träger hindurch in das Innere der Aufnahmebohrung für den Bolzen einschraubbar sein und bei eingestecktem Bolzen diesen durch Kraftschluss in einer bestimmten Position halten.

In einer anderen Ausgestaltung greift die Klemmschraube nicht in die Aufnahmebohrung für den Bolzen des Mikroskophalters ein, sondern in ein Innengewinde der Klemmlasche der Arretiereinrichtung. Die den Bolzen arretierende Klemmlasche wird durch Anziehen der Klemmschraube derart an den Bolzen gedrückt, dass der Mikroskophalter durch Kraft- und Formschluss mit der Kulisse der Klemmlasche in der gewählten Position festgehalten wird.

Es sei darauf hingewiesen, dass auch bei dieser Ausgestaltung ein Lösen der Klemmschraube nicht zu einem unbeabsichtigten Freigeben des Bolzens führen kann, da die Klemmschraube mit der Klemmlasche nur in Schraubverbindung gebracht werden kann, wenn sich diese in einer Arretierstellung befindet. Erst bei gelöster Klemmschraube und bei Verschwenken der Klemmlasche in eine Freigabestellung kann der Bolzen des Mikroskophalters sich vom Träger lösen.

In einer vierten Ausführungsform weist der Träger wiederum eine Aufnahmebohrung für einen Bolzen eines Mikroskophalters auf, der mit dieser Aufnahmebohrung in Eingriff zu bringen ist, wobei die Arretiereinrichtung nun eine federbelastete Klemmzange enthält, die in ihrer Arretierposition einen im Inneren der Aufnahmebohrung vorhandenen Bolzen sichert.

Bei dieser Ausführungsform ist es sinnvoll, wenn die federbelastete Klemmzange um eine Drehachse drehbar gelagert ist, und sich von einer Seite gegen eine Feder abstützt, während die andere Seite eine Kulisse aufweist, die für eine sichere Arretierung mit einem Bolzen des Mikroskophalters ausgebildet ist. Weiterhin ist es vorteilhaft, wenn sich die Klemmzange in Ruhestellung in ihrer Arretierposition befindet, und wenn durch Betätigung der Klemmzange gegen die Federkraft die Klemmzange in eine Freigabeposition zu bringen ist, in der sie einen in der Aufnahmebohrung im Träger vorhandenen Bolzen freigibt.

Bei dieser vierten Ausführungsform kann die Klemmeinrichtung wiederum durch eine Klemmschraube gebildet werden, die in das Innere der Aufnahmebohrung für den Bolzen geschraubt werden kann, wo sie durch Kraftschluss den Bolzen in der gewählten Position hält. Die Kulisse der Klemmzange ist so ausgebildet, dass bei gelöster Klemmschraube eine Verdrehung des Bolzens in der Aufnahmebohrung möglich ist.

Bei dieser Ausführungsform kann es zweckmäßig sein, eine Feststellschraube vorzusehen, die eine Betätigung der Klemmzange in Richtung Freigabeposition verhindert. Hierzu verläuft die Feststellschraube geeigneterweise parallel zur Feder, auf die sich die Klemmzange stützt, so dass nur bei gelöster Feststellschraube eine Betätigung der Klemmzange entgegen der Federkraft möglich ist.

Bei der erfindungsgemäßen Vorrichtung ist es vorteilhaft, wenn der Träger zwei zueinander senkrechte Aufnahmebohrungen für einen Bolzen eines Mikroskophalters aufweist. Hierdurch ist eine vertikale und horizontale Befestigung eines Mikroskophalters wählbar, d.h. der Bolzen des Mikroskophalters kann von oben, von unten oder auch von vorne in horizontaler Richtung in die Aufnahmebohrung im Träger eingesteckt werden.

Im Folgenden sollen die Erfindung und ihre Vorteile anhand von in den Zeichnungen dargestellten Ausführungsformen näher erläutert werden.
- Figur 1: zeigt in seitlicher Ansicht schematisch ein Schwenkarmstativ mit Mikroskop,
- Figur 2: zeigt zwei Ansichten einer bekannten Vorrichtung zum Befestigen eines Mikroskophalters,
- Figur 3: zeigt schematisch eine erste Ausführungsform der erfindungsgemäßen Befestigungsvorrichtung, wobei Figur 3A einen seitlichen Querschnitt, Figur 3B den entsprechenden Querschnitt in Draufsicht zeigt,
- Figur 4: zeigt eine zweite Ausführungsform der erfindungsgemäßen Befestigungsvorrichtung schematisch in drei verschiedenen Ansichten,
- Figur 4A: im seitlichen Querschnitt, Figur 4B der Querschnitt in Draufsicht und Figur4C in perspektivischer Darstellung,
- Figur 5: zeigt eine dritte Ausführungsform der Erfindung schematisch in drei verschiedenen Ansichten, Figur 5A in der Draufsicht in vertikaler Richtung, Figur 5B im seitlichen Querschnitt und Figur 5C in perspektivischer Darstellung,
- Figur 6: zeigt eine vierte Ausführungsform der erfindungsgemäßen Befestigungsvorrichtung in schematischer Darstellung, wobei Figur 6A den Träger der Befestigungsvorrichtung mit den verschiedenen Anschlussmöglichkeiten für einen Mikroskophalter zeigt und Figur 6B einen Querschnitt in vertikaler Draufsicht einer vierten Ausführungsform der Erfindung bei vertikal montiertem Mikroskophalter darstellt, und
- Figur 7: zeigt eine vierte Ausführungsform der erfindungsgemäßen Befestigungsvorrichtung in schematischer Darstellung, wobei Figur 7A den Träger der Befestigungsvorrichtung mit den verschiedenen Anschlussmöglichkeiten für einen Mikroskophalter zeigt und Figur 7B einen Querschnitt in vertikaler Draufsicht einer vierten Ausführungsform der Erfindung bei horizontal montiertem Mikroskophalter darstellt.

Die Figuren 1 und 2 wurden bereits in der Beschreibungseinleitung im Zusammenhang mit den der Erfindung zugrunde liegenden Problemen besprochen.

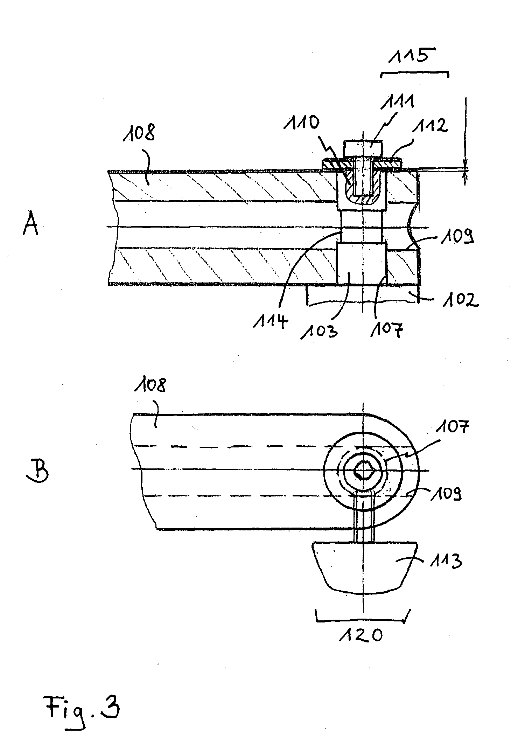

Die vier Ausführungsformen der Erfindung werden im Folgenden anhand der Figuren 3 bis 7 in den dort dargestellten vorteilhaften Ausgestaltungen im Folgenden erläutert.

### Erste Ausführungsform

Figur 3 zeigt einen Teil eines Trägers 108 mit der erfindungsgemäßen Befestigungsvorrichtung für einen Mikroskophalter im Wesentlichen bestehend aus einer Klemmeinrichtung 120 und einer Arretiereinrichtung 115. Figur 3A und Figur 3B zeigen den selben Ausschnitt, jeweils in unterschiedlicher Ansicht. Im Querschnitt der Figur 3A ist der Bolzen 103 eines Mikroskophalters 102 zu sehen, der vertikal von unten in eine entsprechende Aufnahmebohrung 107 im Träger eingreift. Die erfindungsgemäße Arretiereinrichtung 115 weist im Wesentlichen eine Schraube 111 mit Unterlegscheibe 112 auf, die zur Befestigung des Bolzens 103 am Träger 108 dient. Hierzu besitzt der Bolzen 103 ein Innengewinde 110, in das die Schraube 111 eingeschraubt werden kann. Im dargestellten Beispiel stützt sich die Unterlegscheibe 112 gegen den Rand der vertikalen Aufnahmebohrung 107 für den Bolzen ab. In der Position gemäß Figur 3A ist der Bolzen um seine Achse drehbar, so dass durch Drehen des Mikroskophalters 102 um die Bolzenachse eine Arbeitsposition einstellbar ist.

Im dargestellten Beispiel der ersten Ausführungsform bildet die Klemmschraube 113 den wesentlichen Teil der Klemmeinrichtung 120. Nach Wählen der gewünschten Arbeitsposition wird ein weiteres Verdrehen des Bolzens 103 um seine Achse durch Feststellen der Klemmschraube 113 verhindert. Diese Klemmschraube ist in diesem Beispiel senkrecht zur vertikalen Aufnahmebohrung 107 für den Bolzen in diese Aufnahmebohrung 107 einschraubbar, um mit ihrer Stirnfläche auf den Mantel des Bolzens gedrückt zu werden. In der Regel weisen die Bolzen 103 der Mikroskophalter 102 eine seitliche Eindrehung 114 auf. Es ist zweckmäßig, wenn die Stirnfläche der Klemmschraube 113 derart ausgebildet ist, dass die Stirnfläche in diese seitliche Eindrehung 114 drückt und den Bolzen in seiner Stellung durch Kraftschluss hält. Figur 3B zeigt schematisch den geklemmten Bolzen.

Prinzipiell ist die dargestellte Ausführungsform der Erfindung auch auf eine horizontale Befestigung des Mikroskophalters übertragbar. Hierzu wird der Bolzen des Mikroskophalters in die horizontale Aufnahmebohrung 109 eingesetzt. Andererseits muss bei dieser Art der Befestigung die Arretiereinrichtung nicht unbedingt bedient werden, da beim Lösen der Klemmeinrichtung ein unbeabsichtigtes Herabfallen des Mikroskophalters nicht sehr wahrscheinlich ist, da hierzu der Bolzen aus der Aufnahmebohrung 109 herausgezogen werden muss. Die dargestellte erste Ausführungsform eignet sich folglich insbesondere für die vertikale Befestigung des Mikroskophalters, also insbesondere bei Einsetzen des Bolzens von unten.

Die erste Ausführungsform der Erfindung besticht insbesondere durch ihre Einfachheit, da für die Arretiereinrichtung lediglich eine Schraube mit Unterlegscheibe erforderlich ist und der Bolzen des Mikroskophalters mit einem entsprechenden Innengewinde versehen werden muss. Es sei an dieser Stelle ausdrücklich erwähnt, dass anstelle der dargestellten Schraubverbindung auch andere mechanische Verbindungsformen von Bolzen und Träger, wie geeignete Steckverbindungen, oder auch eine magnetische Verbindung möglich ist.

### Zweite Ausführungsform

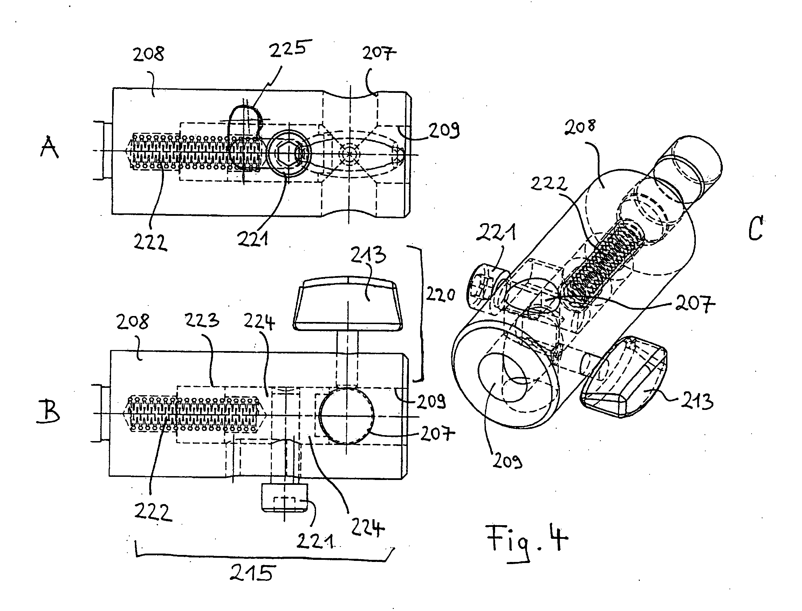

Figur 4 zeigt eine zweite Ausführungsform der Erfindung in verschiedenen Ansichten. Der dargestellte Träger 208 ist hier derart dargestellt, dass er seinerseits an einen Tragearm, wie einen Schwenkarm 4 (vergl. Figur 1) angebracht werden kann. Er kann aber auch in das Ende des Schwenkarms integriert sein. Der Träger 208 weist zwei Aufnahmebohrungen 207, 209 für die vertikale bzw. horizontale Befestigung eines Mikroskophalters auf. In der in Figur 4B dargestellten Draufsicht ist der über einen Rastbolzen 221 bedienbare Schieber 224 gut zu erkennen, der auf einer Feder 222 (oder einem anderen geeigneten Element, das eine Rückstellkraft ausübt) gelagert ist. Feder 222 und Schieber 224 sind in entsprechenden Aufnahmebohrungen im Inneren des Trägers 208 gelagert. Rastbolzen 221, Schieber 224 und Feder 222 bilden hier die wesentlichen Elemente der erfindungsgemäßen Arretiereinrichtung 215. Das der Feder 222 abgewandte Ende des Schiebers 224 weist eine Stirnfläche auf, die geeignet ist, einen in die vertikale Aufnahmebohrung 207 eingeführten Bolzen eines Mikroskophalters in seiner Position sicher zu halten, wobei eine Drehung des Mikroskophalters um die Bolzenachse weiterhin möglich bleibt. In der dargestellten Ausführungsform schnappt die Stirnfläche des Schiebers 224 in eine seitliche Eindrehung am Bolzen des Mikroskophalters. Während der Bolzendurchmesser in der Regel 15,8 mm beträgt, beträgt der Durchmesser der seitlichen Eindrehung meist 14,0 mm. Die hierdurch entstehenden 0,9 mm tiefen Schultern sind ideal geeignet, den Bolzen durch Einschnappen des Schiebers in die Eindrehung sicher am Träger 208 zu halten.

Durch Drehen um die Bolzenachse kann eine geeignete Arbeitsposition des Mikroskophalters gewählt werden. Anschließend wird der Mikroskophalter mittels der Klemmeinrichtung, hier im Wesentlichen die Klemmschraube 213, fixiert. Wie bei der ersten Ausführungsform wird die Klemmschraube senkrecht zur vertikalen Aufnahmebohrung 207 durch den Träger 208 in die Aufnahmebohrung 207 geschraubt, wo sie den dort befindlichen Bolzen im Reibschluss hält. Wiederum kann ein Lösen der Klemmschraube 213 nicht zu einem unbeabsichtigten Lösen des Bolzens aus der Aufnahmeöffnung 207 führen.

Zum Einführen und zum Herausnehmen eines Bolzens aus der Aufnahmebohrung 207 wird der Rastbolzen 221 gegen die Schiebekraft der Feder 222 nach hinten geschoben, so dass der Bolzen in der Aufnahmebohrung 207 freigegeben wird. Zur Erleichterung der Bedienung ist es zweckmäßig, eine Parkposition 225 für den Schieber 224 vorzusehen, beispielsweise dadurch, dass seitlich von der Schieberichtung im Träger eine entsprechende Ausnehmung gefräst wird. Der Rastbolzen 221 wird dann in diese Ausnehmung geführt, so dass der Benutzer beim Ummontieren von Mikroskophaltern nicht den Rastbolzen 221 gegen die Schiebekraft der Feder 222 gedrückt halten muss.

Die dargestellte Ausführungsform eignet sich auch für eine horizontale Montage des Mikroskophalters, zu der der Bolzen des Mikroskophalters in die Aufnahmebohrung 209 gesteckt wird. Hierzu wird zweckmäßigerweise die Riegelfunktion der Arretiereinrichtung 215 deaktiviert, indem beispielsweise der Rastbolzen 221 in die Parkposition 225 gebracht wird. Der Bolzen kann dann weit genug in die Aufnahmebohrung 209 eingreifen und über die Klemmschraube in einer bestimmten Arbeitsposition gehalten werden.

### Dritte Ausführungsform

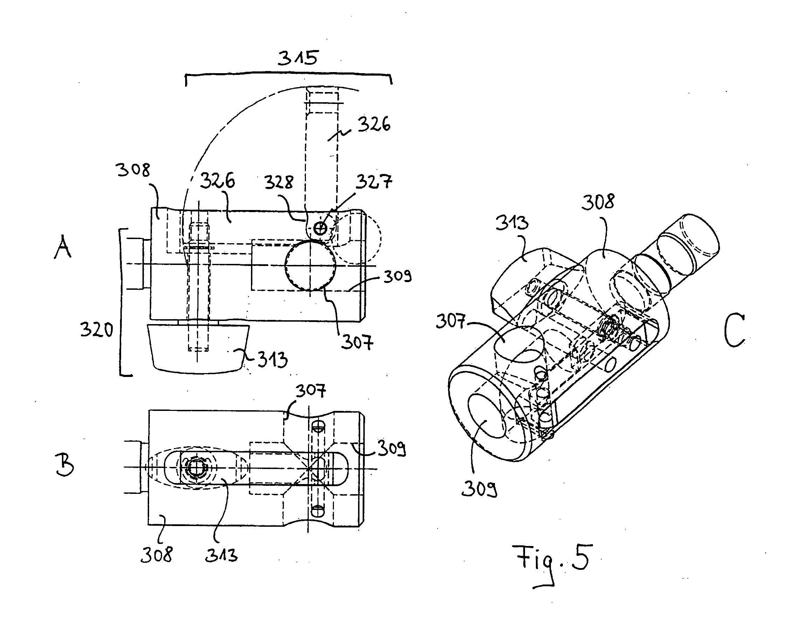

Figur 5 zeigt die dritte Ausführungsform der Erfindung in verschiedenen Ansichten. Die Arretiereinrichtung 315 wird hier im Wesentlichen durch eine Klemmlasche 326 gebildet, während die Klemmeinrichtung 320 im Wesentlichen wieder durch eine Klemmschraube 313 gebildet wird, die in diesem Fall mit der Arretiereinrichtung 315 wechselwirkt. Figur 3A zeigt die Draufsicht dieser dritten Ausführungsform, wobei die Klemmlasche 326 in zwei verschiedenen Positionen dargestellt ist. Die Klemmlasche 326 ist drehgelagert, wobei das Drehzentrum mit 327 bezeichnet ist. In dem dargestellten Beispiel liegt das Drehzentrum nahe der vertikalen Aufnahmebohrung 307.

Zum Zwecke der Beschreibung der Arretierung wird hier wie in den vorhergehenden Ausführungsformen davon ausgegangen, dass der Bolzen des Mikroskophalters eine seitliche Eindrehung aufweist. Die Kulisse 328 der Klemmlasche 326 ist so geformt, dass sie einen (vertikal oder horizontal) in die Aufnahmebohrung im Träger eingesteckten Bolzen sicher arretiert. Hierzu greift die Kulisse 328 in die seitliche Eindrehung am Bolzen ein, wenn die Klemmlasche 326 in Arretierstellung gebracht ist. In dem hier dargestellten Beispiel muss die Klemmlasche auf 90° ausgeschwenkt werden, um bei allen Einsteckvarianten den Mikroskopträger montieren und demontieren zu können. Ein Verschwenken der Klemmlasche 326 hat sofort eine Arretierfunktion zur Folge, wodurch ein unbeabsichtigtes Freigeben des Bolzens nahezu vollständig verhindert werden kann.

Im dargestellten Beispiel ist die Klemmeinrichtung 320 mit der Arretiereinrichtung 315 durch die Klemmschraube 313 gekoppelt, die in ein Gewinde in der Klemmlasche eingreift. Die Klemmschraube 313 ist zweckmäßigerweise nicht verlierbar am Träger 308 befestigt. Durch Anziehen der Klemmschraube 313 wird die Klemmlasche 326 stärker in das Trägerinnere gezogen, so dass der Druck auf den arretierten Bolzen zunimmt. Durch Zudrehen der Klemmschraube 313 kann dieser Druck soweit erhöht werden, dass ein Verändern der Position des Mikroskophalters durch Drehen um die Bolzenachse ganz verhindert werden kann.

Es ist wichtig, darauf hinzuweisen, dass bei dieser Ausführungsform durch Lockern oder gar Lösen der Klemmschraube 313 kein unbeabsichtigtes Lösen eines Bolzens aus der Aufnahmebohrung erfolgen kann, da hierzu zusätzlich die Klemmlasche 326 um 90° ausgeschwenkt werden muss.

Figur 5B zeigt den seitlichen Querschnitt der in Figur 5A dargestellten dritten Ausführungsform. Figur 5C zeigt eine perspektivische Ansicht dieser Ausführungsform.

### Vierte Ausführungsform

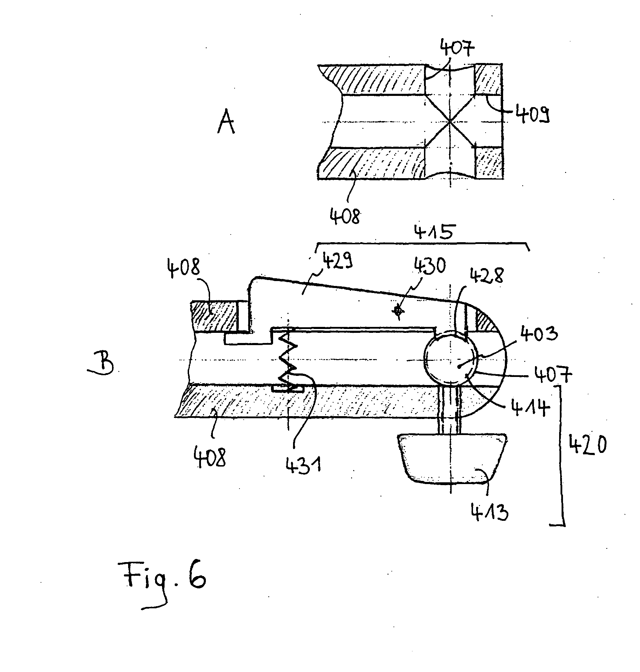

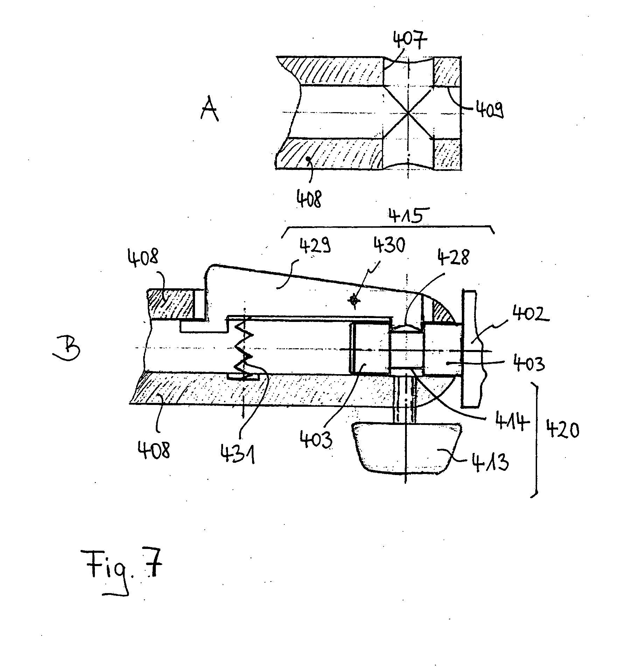

Figur 6 und Figur 7 zeigen eine weitere Lösungsvariante, bei der die Arretiereinrichtung im Wesentlichen durch eine Klemmzange, die Klemmeinrichtung im Wesentlichen durch eine Klemmschraube gebildet wird. Die Klemmzange ist mit 429, die Klemmschraube mit 413 bezeichnet. Figur 6A und Figur 7A zeigen das Grundgerüst des Trägers 408 mit den beiden Aufnahmebohrungen 407 und 409 für eine vertikale bzw. horizontale Befestigung eines Mikroskophalters. Figur 6B zeigt die Verhältnisse bei vertikaler, Figur 7B bei horizontaler Montage des Mikroskophalters.

In der dargestellten vierten Ausführungsform wird die Arretiereinrichtung 415 durch eine Klemmzange 429 gebildet, die um eine Drehachse 430 drehbar gelagert ist, wobei das eine Ende der Klemmzange 429 sich auf eine Feder 431 stützt. Das der Feder 431 abgewandte Ende der Klemmzange 429 greift in seiner Arretierposition in das Innere der Aufnahmebohrung 407 ein (vergl. die Draufsicht von oben in Figur 6B). Die Kulisse 428 der Klemmzange 429 ist entsprechend ausgebildet, um beispielsweise mit einer seitlichen Eindrehung am Bolzen 403 des Mikroskophalters eine sichere Verbindung zu bilden. Erst durch Drücken des anderen Endes der Klemmzange 429 gegen die Kraft der Feder 431 wird der Bolzen 403 im Inneren der Aufnahmebohrung 407 freigegeben und löst sich. Um maximale Sicherheit zu bieten, ist die Kulisse 428 derart geformt, dass erst bei vollständigem Niederdrücken der Klemmzange 429 gegen die Feder 431 eine Freigabe des Bolzens 403 erfolgt.

Die Klemmeinrichtung 420 ist bei der dargestellten vierten Ausführungsform konstruktionsgleich zu den Klemmeinrichtungen der ersten und zweiten Ausführungsform.

Figur 7B zeigt die vierte Ausführungsform mit horizontal montiertem Mikroskophalter 402, in der gleichen Ansicht wie Figur 6B. Die Kulisse 428 der Klemmzange 429 ist entsprechend geformt, um die Eindrehung 414 des Bolzens 403 sowohl bei vertikaler wie auch bei horizontaler Befestigung (form- und/oder kraftschlüssig) zu sichern. Bei beiden Befestigungsarten kann die Kulisse 428 in die Eindrehung 414 am Bolzen 403 derart eingreifen, dass bei gelockerter oder gelöster Klemmschraube 413 ein unbeabsichtigtes Herausnehmen oder Herausfallen des Mikroskophalters aus dem Träger 408 unmöglich wird.

In einer nicht dargestellten Modifikation ist eine Feststellschraube vorgesehen, die parallel zur Feder 431 und auf der gleichen Hebelseite verläuft, und die beim Einschrauben an der Unterseite der Klemmzange 429 anliegt und ein Herabdrücken der Klemmzange gegen die Federkraft unmöglich macht. Eine solche Feststellschraube kann gegen ein unbeabsichtigtes Drücken der Klemmzange schützen.

Bei allen dargestellten Ausführungsformen ist es zweckmäßig, die die Arretierwirkung entfaltenden Teile der Arretiereinrichtung aus einem unnachgiebigen Material wie Metall zu formen, um eine zuverlässige Arretierwirkung und hohe Lebensdauer zu erhalten. Die Erfindung ermöglicht insbesondere bei der vertikalen Montage zusätzlich zur bekannten Klemmwirkung eine wirksame Arretierwirkung, so dass ein unbeabsichtigtes Lösen des Mikroskophalters vom Träger nicht mehr möglich ist. Hierdurch erhöht die Erfindung die Betriebssicherheit. Schließlich ermöglicht die Erfindung verschiedene Montagemöglichkeiten des Mikroskophalters bei ergonomisch günstiger Gestaltung des Trägers.

### Bezugszeichenliste

- 1: Mikroskop
- 2, 102, 402: Mikroskophalter
- 3, 103, 403: Bolzen des Mikroskophalters
- 4: Schwenkarm
- 5: Säule
- 6: Basisplatte
- 7, 107, 207, 307, 407: Aufnahmebohrung für Bolzen (vertikal)
- 8, 108, 208, 308, 408: Träger
- 9: Klemmlasche
- 10: Schraubverschluss
- 109, 209, 309, 409: Aufnahmebohrung für Bolzen (horizontal)
- 110: Innengewinde im Bolzen
- 111: Schraube
- 112: Unterlegscheibe
- 113, 213, 313, 413: Klemmschraube
- 114, 414: Eindrehung am Bolzen
- 115, 215, 315, 415: Arretiereinrichtung
- 120, 220, 320, 420: Klemmeinrichtung
- 221: Rastbolzen
- 222: Feder
- 223: Aufnahmebohrung für Schieber
- 224: Schieber
- 225: Parkposition für Schieber
- 326: Klemmlasche
- 327: Drehzentrum
- 328: Kulisse der Klemmlasche
- 428: Kulisse der Klemmzange
- 429: Klemmzange
- 430: Drehachse der Klemmzange
- 431: Feder

## Patentansprüche

1. Vorrichtung zum Befestigen eines Mikroskophalters (2, 102, 402) an einem Träger (8, 108, 208, 308, 408), die eine Klemmeinrichtung (120, 220, 320, 420) zum Halten des Mikroskophalters in einer auszuwählenden Position aufweist,
**gekennzeichnet durch**
eine Arretiereinrichtung (115, 215, 315, 415) zur zusätzlichen Sicherung des Mikroskophalters am Träger.

2. Vorrichtung nach Anspruch 1, **dadurch gekennzeichnet, dass** die Klemmeinrichtung (120, 220, 320, 420) eine Klemmschraube (113, 213, 313, 413) aufweist.

3. Vorrichtung nach Anspruch 1 oder 2, wobei der Mikroskophalter (102) einen Bolzen (103) aufweist, der mit einer Aufnahmebohrung (107, 109) im Träger (108) in Eingriff zu bringen ist, **dadurch gekennzeichnet, dass** die Arretiereinrichtung (115) eine Schraube (111) aufweist, die in ein Innengewinde (110) des Bolzens (103) zu schrauben ist.

4. Vorrichtung nach Anspruch 3, **dadurch gekennzeichnet, dass** die Arretiereinrichtung (115) eine Unterlegscheibe (112) aufweist, deren äußerer Durchmesser größer ist als der Durchmesser der Aufnahmebohrung (107) im Träger (108) für den Bolzen (103).

5. Vorrichtung nach Anspruch 3 oder 4, **dadurch gekennzeichnet, dass** die Klemmeinrichtung (120) eine Klemmschraube (113) aufweist, die durch den Träger (108) hindurch in das Innere der Aufnahmebohrung (107, 109) für den Bolzen (103) einschraubbar ist, wobei die Schraubrichtung vorzugsweise senkrecht zur Richtung der Aufnahmebohrung (107, 109) für den Bolzen (103) verläuft.

6. Vorrichtung nach Anspruch 1 oder 2, wobei der Mikroskophalter (102) einen Bolzen (103) aufweist, der mit einer Aufnahmebohrung (207, 209) im Träger (208) in Eingriff zu bringen ist, **dadurch gekennzeichnet, dass** die Arretiereinrichtung (215) einen federbelasteten Schieber (224) aufweist, der in seiner Arretierposition den Bolzen im Inneren der Aufnahmebohrung (207) hält, wobei die Aufnahmebohrung (223) für den Schieber (224) vorzugsweise senkrecht zur vertikalen Aufnahmebohrung (207) für den Bolzen des Mikroskophalters verläuft.

7. Vorrichtung nach Anspruch 6, **dadurch gekennzeichnet, dass** die Stirnfläche des Schiebers (224) derart ausgebildet ist, dass diese in der Arretierposition in eine seitliche Eindrehung (114) am Bolzen (103) des Mikroskophalters (102) einschnappt.

8. Vorrichtung nach Anspruch 6 oder 7, **dadurch gekennzeichnet, dass** der Schieber (224) in eine Parkposition (225) verschiebbar ist, in der er nicht in das Innere der Aufnahmebohrung (207, 209) für den Bolzen ragt.

9. Vorrichtung nach einem der Ansprüche 6 bis 8, **dadurch gekennzeichnet, dass** die Klemmeinrichtung (220) eine Klemmschraube (213) aufweist, die durch den Träger (208) hindurch in das Innere der Aufnahmebohrung (207, 209) für den Bolzen einschraubbar ist, wobei die Schraubrichtung vorzugsweise senkrecht zur Richtung der Aufnahmebohrung (207, 209) für den Bolzen verläuft.

10. Vorrichtung nach Anspruch 9, **dadurch gekennzeichnet, dass** die Schraubrichtung der Klemmschraube (213) senkrecht zur Richtung der Aufnahmebohrung (223) für den Schieber (224) der Arretiereinrichtung (215) verläuft.

11. Vorrichtung nach Anspruch 1 oder 2, wobei der Mikroskophalter (102) einen Bolzen (103) aufweist, der mit einer Aufnahmebohrung (307, 309) im Träger (308) in Eingriff zu bringen ist, **dadurch gekennzeichnet, dass** die Arretiereinrichtung (315) eine drehgelagerte Klemmlasche (326) aufweist, die bei Verschwenken in eine Arretierstellung den Bolzen im Inneren der Aufnahmebohrung (307, 309)für den Bolzen hält.

12. Vorrichtung nach Anspruch 11, **dadurch gekennzeichnet, dass** die Klemmlasche (326) eine Kulisse (328) aufweist, die in der Arretierstellung in eine seitliche Eindrehung (114) am Bolzen (103) des Mikroskophalters (102) eingreift.

13. Vorrichtung nach Anspruch 11 oder 12, **dadurch gekennzeichnet, dass** die Klemmlasche (326) in eine Freigabestellung verschwenkbar ist, in der sie einen Bolzen im Inneren der Aufnahmebohrung (307, 309) freigibt.

14. Vorrichtung nach einem der Ansprüche 11 bis 13, **dadurch gekennzeichnet, dass** die Kulisse (328) der Klemmlasche (326) derart ausgebildet ist, dass der überwiegende Teil des Verschwenkbereichs der Klemmlasche (326) zu einer Arretierstellung der Arretiereinrichtung (315) führt, während der andere Teil des Verschwenkbereichs, vorzugsweise nur eine bestimmte Verschwenkposition der Klemmlasche (326), zu einer Freigabestellung der Arretiereinrichtung (315) führt.

15. Vorrichtung nach einem der Ansprüche 11 bis 14, **dadurch gekennzeichnet, dass** die Klemmlasche (326) aus Metall gefertigt ist.

16. Vorrichtung nach einem der Ansprüche 11 bis 15, **dadurch gekennzeichnet, dass** die Klemmeinrichtung (320) eine vorzugsweise nicht verlierbare Klemmschraube (313) aufweist, die vorzugsweise mit der Klemmlasche (326) der Arretiereinrichtung (315) derart zu verschrauben ist, dass ein in der Aufnahmebohrung (307, 309) des Trägers (308) vorhandener Bolzen des Mikroskophalters durch Kraftschluss mit der Kulisse (328) der Klemmlasche (326) in seiner Position festgehalten wird.

17. Vorrichtung nach Anspruch 1 oder 2, wobei der Mikroskophalter (402) einen Bolzen (403) aufweist, der mit einer Aufnahmebohrung (407, 409) im Träger (408) in Eingriff zu bringen ist, **dadurch gekennzeichnet, dass** die Arretiereinrichtung (415) eine federbelastete Klemmzange (429) aufweist, die in ihrer Arretierposition den Bolzen (403) im Inneren der Aufnahmebohrung (407, 409) für den Bolzen hält.

18. Vorrichtung nach Anspruch 17, **dadurch gekennzeichnet, dass** die Klemmzange (429) eine Kulisse (428) aufweist, die in der Arretierposition in eine seitliche Eindrehung (414) am Bolzen (403) eingreift.

19. Vorrichtung nach Anspruch 17 oder 18, **dadurch gekennzeichnet, dass** die Klemmzange (429) entgegen der Federkraft in eine Freigabeposition zu bewegen ist, in der sie einen Bolzen (403) im Inneren der Aufnahmebohrung (407, 409) freigibt.

20. Vorrichtung nach einem der Ansprüche 17 bis 19, **dadurch gekennzeichnet, dass** eine Feststellschraube vorgesehen ist, um eine Betätigung der Klemmzange (429) aus ihrer Arretierposition heraus zu verhindern.

21. Vorrichtung nach einem der Ansprüche 17 bis 20, **dadurch gekennzeichnet, dass** die Klemmeinrichtung (420) eine Klemmschraube (413) aufweist, die durch den Träger (408) hindurch in das Innere der Aufnahmebohrung (407, 409) für den Bolzen (403) einschraubbar ist, wobei die Schraubrichtung vorzugsweise senkrecht zur Richtung der Aufnahmebohrung (407, 409) für den Bolzen verläuft.

22. Vorrichtung nach einem der Ansprüche 1 bis 21, **dadurch gekennzeichnet, dass** der Träger (108, 208, 308, 408) zwei zueinander senkrechte Aufnahmebohrungen (107, 207, 307, 407; 109, 209, 309, 409) für einen Bolzen eines Mikroskophalters aufweist.
